# EUROPÄISCHE PATENTSCHRIFT

(11) **EP 3 339 748 B1**
(45) Veröffentlichungstag und Bekanntmachung des Hinweises auf die Patenterteilung: **12.01.2022**
(21) Anmeldenummer: 17756904.3
(22) Anmeldetag: 30.01.2017
(51) Int. Cl.: F24D 19/10, F24D 1/00, F24D 1/02, F24D 1/08, F24D 19/08

(54) **VAKUUMDAMPFHEIZSYSTEM**
VACUUM STEAM HEATING SYSTEM
SYSTÈME DE CHAUFFAGE À VAPEUR ET À VIDE

(30) Priorität: 24.02.2016 RU 2016106130
(43) Veröffentlichungstag der Anmeldung: 27.06.2018
(73) Patentinhaber: ENERGY OF VACUUM, LLC, 121205 Moscow (RU)
(72) Erfinder: KHAN, Viktor Konstantinovich, Taraz 080000 (KZ); KHAN, Anton Viktorovich, Taraz 080000 (KZ); VAN, Igor Wu-Yunovich, 119285 Moscow (RU); KHAN, Lyubov Viktorovna, Taraz 080000 (KZ)
(74) Vertreter: Jeck, Anton
(86) Internationale Anmeldenummer: PCT/RU2017/000042
(87) Internationale Veröffentlichungsnummer: WO 2017/146608

(56) Entgegenhaltungen:
- KZ-A- 18 932
- RU-C1- 2 016 354
- RU-C1- 2 195 608
- RU-C1- 2 195 608
- UA-U- 89 954
- US-A- 874 113
- US-A- 1 304 106
- US-A- 1 771 077
- US-A- 1 946 676
- US-B2- 8 702 013

## Beschreibung

Die Erfindung betrifft ein Vakuumdampfheizungssystem und bezieht sich auf die Wärmeenergiewirtschaft und insbesondere auf energiesparende Technologien.

Das Vakuumdampfheizungssystem mit parallelen Untersystemen für eine Kondenswasserrückführung und einer Unterdruckregelung in einem System ist für eine Wärmeströmungsübertragung von einer Wärmeenergiequelle an Verbraucher vorgesehen und dient zur autonomen Wärmeversorgung von Wohn-, öffentlichen und Betriebsgebäuden, Treibhäusern, Viehfarmen usw.

Für die hocheffiziente Wärmeströmungsübertragung wird ein Vakuumdampfverfahren angewendet, das auf einem geschlossenen Verdampfungs-Kondensationszyklus mit einer hohen Geschwindigkeit der molaren Wärmeübertragung durch Dampf beruht.

Das Vakuumdampfverfahren für Wärmeübertragung wird durch ein System durchgeführt, das einen Dampfkessel einschließt. Der Dampfkessel ist mit einer Einheit zur automatischen Regelung und Sperrung von Energieträgerzufuhr, Geräten zur visuellen Wasserstandsüberwachung im Kessel und Dampfdrucküberwachung im Dampfsammler sowie mit Sicherheitsventilen versehen. Die Sicherheitsventile sorgen für einen sicheren Kesselbetrieb. Hier sind auch eine obere Dampfverteilungsleitung und eine Kondenswasserleitung mit einem mechanischen Umwälz-Kondenswasserableiter in ein Kondenswassersammelgefäß und danach in den Kessel horizontal angeordnet. Außerdem sind senkrechte trennende Dampfleitungen für die Dampfzufuhr in die Verrohrung von Heizgeräten und eine Vakuum-Wasserringpumpe vorgesehen, um einen Anfangsunterdruck zu erzeugen und die Wärmeträgertemperatur zuverlässig zu regeln. Die Regelung erfolgt, indem der Grad des Vakuums im System mittels automatischer Pumpenbetriebssteuerung verändert wird. Der hohe Wirkungsgrad dieses Systems wird durch einen minimalen Energieaufwand bei der Übertragung der Wärmeströmung von der Wärmequelle zu den Verbrauchern und durch die zentralisierte qualitative und quantitative Regelung des Dampfverbrauchs erreicht. Der Dampfverbrauch wird dank einer Einheit zur automatischen Regelung und Sperrung der Energieträgerzufuhr und dank eines Untersystems zur Unterdruckregelung sichergestellt. Das Heizungssystem unterscheidet sich gegenüber vergleichbaren Anlagen - dem Vakuumdampfsystem und dem "subatmosphärischen" Heizungssystem - durch das Vorhandensein eines Untersystems zur Kondenswasserrückführung in den Dampfkessel und dem je nach erforderlicher Temperatur steuerbaren Wärmeträger (qualitative Regelung), indem unterschiedliche Grade des Unterdrucks (Vakuums) erzeugt werden. Das Heizungssystem ist auch durch die quantitative Regelung des Wärmeträgerverbrauchs dank der automatischen Regelung der Energieträgerzufuhr zum Brenner der Kesselfeuerung gekennzeichnet. Das System weist eine hohe Wärmeübertragungszahl mit einem Wirkungsgrad von 89 % und einer beachtlichen Wärmeträgereinsparung bis zu 38 % auf. Die Energieeffizienz des Systems wird auch dadurch sichergestellt, dass die Vorrichtung zur Kondenswasserrückführung in den Dampfkessel keinen Strom verbraucht und die Vakuum-Wasserringpumpe im aussetzenden Betrieb läuft.

Die Störungsfreiheit und die Funktionsstabilität dieses Vakuumdampfheizungssystems während seines Betriebs werden durch das unabhängige Untersystem der Kondenswasserrückführung in den Kessel unter Anwendung des mechanischen Umwälz-Kondenswasserableiters (Kondenswasserpumpe) sichergestellt. Die Unterdruckaufrechterhaltung und -regelung im System durch das Untersystem der Vakuumbildung wird unter Anwendung des Systems zur automatischen Steuerung des Vakuum-Wasserringpumpenbetriebs gesichert.

Aus dem Stand der Technik ist ein Vakuumdampfsystem bekannt, das einen Kessel mit einem Dampfsammler, mittels Hähnen mit einer Dampfleitung verbundene Heizgeräte, einen Kondenswasserableiter mit einer Kondenswasserleitung und eine Evakuierungsvorrichtung (Patent RU 2195608, F24D 1/00, Veröffentlichungsdatum 27.12.2002) enthält. Dieses System ist durch einen hohen Metallaufwand und eine hohe Wahrscheinlichkeit des Undichtwerdens benachteiligt. Das System sieht keine Regelung des Energieträgerverbrauchs und keine Explosionssicherheit des Kessels vor.

Aus dem Stand der Technik ist eine Vakuumdampferhitzungsanlage bekannt (Quellenschrift: s. Internet, Webseite: ngpedia.ru/id427980pl.html "Vakuumdampfsystem. Große Enzyklopädie für Erdöl und Gas"). Die Anlage umfasst einen Dampfkessel, eine Verteilungsleitung, Steigleitungen für die Dampfzufuhr, Heizgeräte, Steigleitungen für die Kondenswasserableitung, einen Filter, eine Saugpumpe und einen Luftabscheider. Der Mangel dieser Anlage ist die Vakuumpumpe, die über einen Luftabscheider mit dem Dampfkessel nacheinander verbunden ist und ständig läuft. Folglich ist der elektrische Stromverbrauch sehr hoch. Es liegt eine hohe Wahrscheinlichkeit des Kavitationsbeginns vor, weil die Pumpe dieser Anlage neben der Luft Dampf und heißes Kondenswasser auspumpt. Bei Überdruck führt der Luftabscheider das Kondenswasser in den Dampfkessel während der Entlüftung nicht effizient zurück. Wenn der Absolutdruck im Kessel niedriger als der Normaldruck (atmosphärischer Druck) ist, ist die Wahrscheinlichkeit hoch, dass die Außenluft in den Kessel eingesaugt wird. Es ist kein Explosionssicherheitssystem für den Kessel vorgesehen.

Der nächstliegende Stand der Technik ist ein bekanntes Vakuumdampfsystem (Quellenschrift P.N. Kamenev, A.N. Skanavi, V.N.Bogoslovsky "Heizung und Lüftung, Teil 1", Moskau, Stroyizdat, 1975). Das Aufbauschema der Einrichtung umfasst einen Dampfkessel, eine Dampf-Kondenswasser-Verrohrung mit Heizgeräten, Kondenswasserableiter, einen Kondenswasserbehälter, eine Vorrichtung für Systemparameterregelung und eine Wasserringpumpe, um Unterdruck zu erzeugen und Kondenswasser umzuwälzen. Dieses System hat den Mangel, dass das Undichtwerden der Abdichtungsmittel der Vakuum-Wasserringpumpe sehr wahrscheinlich ist. Das System hat den weiteren Mangel, dass es nicht möglich ist, verschiedene Vakuumwerte mit einem Membranregler zu regeln, denn dieser Regler ermöglicht die Ein- und Ausschaltung der Pumpe nur bei einem bestimmten Soll-Unterdruck. Bei einem anderen Unterdruckwert muss der Regler umgerüstet bzw. umgestellt werden. Wird die Vakuum-Wasserringpumpe für eine unbestimmte Zeit abgeschaltet, so hört die Kondenswasserzufuhr in den Kessel auf, da die Pumpe mit dem Kessel nacheinander geschaltet ist. Die Pumpe muss ständig laufen und verbraucht viel Strom. Die Wärmeübertragungsstation mit dem Dampfkessel kann nur im Kellerbereich aufgestellt werden, weil die Kondenswasserrückführung in den Kessel beschränkt ist, und zwar dadurch, dass der Dampfgegendruck dem Förderdruck der Ausgangsleitung der Vakuumpumpe Widerstand leistet.

Durch US 874,113 ist ein Vakuumdampfheizsystem mit Wärmeströmungsübertragung nach dem Vakuumdampfverfahren mit einem Dampfkessel, einer oberen Dampfverteilungsleitung, senkrechten Dampf-Trennleitungen, senkrechten Kondenswasserleitungen, einer zentralen Kondenswasserleitung, einem Dampfuntersystem, einem Kondenswasserrückführungsuntersystem, einem Vakuumbildungsuntersystem und einem Raumbeheizungsuntersystem bekannt. Der gesamte Innenraum des Systems ist luftleer gemacht. Der Unterdruck ist regelbar. Ein Behälter enthält einen Schwimmer.

Durch US 1,771,077 ist ein Vakuumdampfheizsystem mit Wärmeströmungsübertragung nach dem Vakuumdampfverfahren mit einem Dampfkessel, einer oberen Dampfverteilungsleitung, senkrechten Dampf-Trennleitungen, senkrechten Kondenswasserleitungen, einer zentralen Kondenswasserleitung, einem Dampfuntersystem, einem Kondenswasserrückführungsuntersystem, einem Vakuumbildungsuntersystem und einem Raumbeheizungsuntersystem bekannt. Der gesamte Innenraum des Systems ist luftleer gemacht. Der Unterdruck ist regelbar. Ein Schwimmer in einem Sammelbehälter dient der Betätigung eines Schalters, der gemeinsam mit einem weiteren Schalter einen Motor zum Antrieb einer Pumpe steuert. Ist eine ausreichende Menge Kondensat schwerkraftbedingt in den Sammelbehälter rückgeflossen, betätigt der sich hebende Schwimmer den Schalter, um das Kondenswasser mittels der Pumpe einem Wasservorratstank zuzuführen.

Durch US 1,946,676 ist ein Dampfheizsystem mit einem Dampfkessel und einer zentralen Luft-Kondensatleitung bekannt. Eine Wärmeströmungsübertragung zu Raumheizungen erfolgt nach einem Verfahren, bei dem Wasserdampf und Luft in Abhängigkeit von der gewünschten zu übertragenden Wärmemenge gemischt werden. In einem Trennungstank wird nach der Rückführung die Luft durch eine Luftpumpe vom kondensierten Wasser abgesaugt.

Durch US 1,304,106 ist ein Dampfheizsystem mit einem Dampfkessel, einer oberen Dampfverteilungsleitung, senkrechten Dampf-Trennleitungen, senkrechten Kondenswasserleitungen, einer zentralen Kondenswasserleitung, einem Dampfuntersystem, einem Kondenswasserrückführungsuntersystem, und einem Raumbeheizungsuntersystem bekannt. In einem Kondenswassersammelbehälter befindet sich ein Schwimmer, der ein Ventil betätigt. Luft entweicht aus dem Kondenswassersammelbehälter durch ein ebenfalls vom Schwimmer betätigtes automatisches Ventil.

Die Aufgabe der Erfindung ist die Entwicklung eines Heizungssystems mit effizienter Nutzung eines Energieträgers (Erdgas, elektrischer Strom usw.), wobei preisgünstige Materialien eingesetzt werden müssen. Das Heizungssystem muss zuverlässig und sicher beim Betrieb, montagefreundlich, bedienungs- und wartungsfreundlich sein und es ermöglichen, dass der Dampfkessel sowohl im Kellerbereich als auch auf dem Dach und auf dem Boden (Überflurausführung) aufgestellt werden kann.

Der technische Effekt wird dadurch erreicht, dass die Wärmeströmung nach dem Vakuumdampfverfahren übertragen wird. Das Verfahren beruht auf der Wärmeenergie-Überleitfähigkeit von der Wärmequelle zu den Verbrauchern mit einem hohen Übertragungsfaktor der Wärmeströmung. Die Übertragung erfolgt über ein geschlossenes Rohrleitungs-Umlaufsystem (Dampfleitungen und Kondenswasserleitungen). Die Anwendung des Vakuumdampfverfahrens zur Wärmeübertragung macht es möglich, den Energieverbrauch zu vermindern und somit die Kosten für die Übertragung der Wärmeenergie zum Raumbeheizungssystem zu reduzieren. Es ist möglich, auf Druckerhöhungspumpen zu verzichten, die für die Wärmeträgerzufuhr zuständig sind, wie es z. B. in einem Wasserheizungssystem mit einem hohen hydrostatischen Druck der Fall ist. Der Transport des Wärmeträgers (luftleerer Dampf) kann unter Anwendung von preiswerten Materialien (Rohre aus kohlenstoffarmem Stahl, Metallverbundrohre, konventionelle Verbindungsstücke, Dampf-Absperrarmatur usw.) erfolgen. Das wird dadurch möglich, dass das System erfindungsgemäß mit einer im aussetzenden Betrieb laufenden Vakuum-Wasserringpumpe ergänzt wird. Die Vakuum-Wasserringpumpe hat ein automatisches System zur Steuerung je nach Systemzustand und vorgegebenen Unterdruckparametern. Beim Starten des Systems entfernt die Vakuum-Wasserringpumpe maximal die in einem Zwischen-Wärmeträger (Wasser, Frostschutzmittel) aufgelöste Luft, wobei die Wärmeträgertemperatur max. 96° C ist. Die Einheit zur automatischen Regelung der Energieträgerzufuhr im Dampfkessel macht es möglich, die Menge des Wärmeträgerverbrauchs (Dampf) zentral zu regeln. Ein Energieträgerzufuhr-Absperrsystem und das Auffüllen des Kessels mit einer berechneten und streng dosierten Menge des Zwischen-Wärmeträgers sorgen für die Explosionssicherheit des Kessels. Die geringe Füllmenge des Zwischen-Wärmeträgers erlaubt es auch, den Energieträgeraufwand zur schnellen Erwärmung des Zwischen-Wärmeträgers im Kessel zu vermindern. Das führt zu einer beachtlichen Einsparung von Wasserressourcen. Dank der Anwendung des Untersystems zur Kondenswasserrückführung im Dampfkessel kann die gesamte Wärmeübertragungsstation sowohl im Kellerbereich als auch auf dem Dach oder auf dem Boden (Überflurausführung) untergebracht werden, denn der mechanische Umwälz-Kondenswasserableiter kann einen Vorspanndruck je nach dem erreichbaren Betriebsdampfdruck bis zu 16 MPa im Dampfkessel erzeugen.

Es sei bemerkt, dass die Druckluft aus dem Kessel des Verdichters als Betriebsmedium für das Umwälzen des Kondenswassers angewendet werden kann. Die Fähigkeit des Umwälz-Kondenswasserableiters, das Kondenswasser in große Höhe zu transportieren, ermöglicht es, die Wärmeübertragungsstation sowohl im Kellerbereich als auch auf dem Dach oder auf dem Boden (Überflurausführung) unterzubringen.

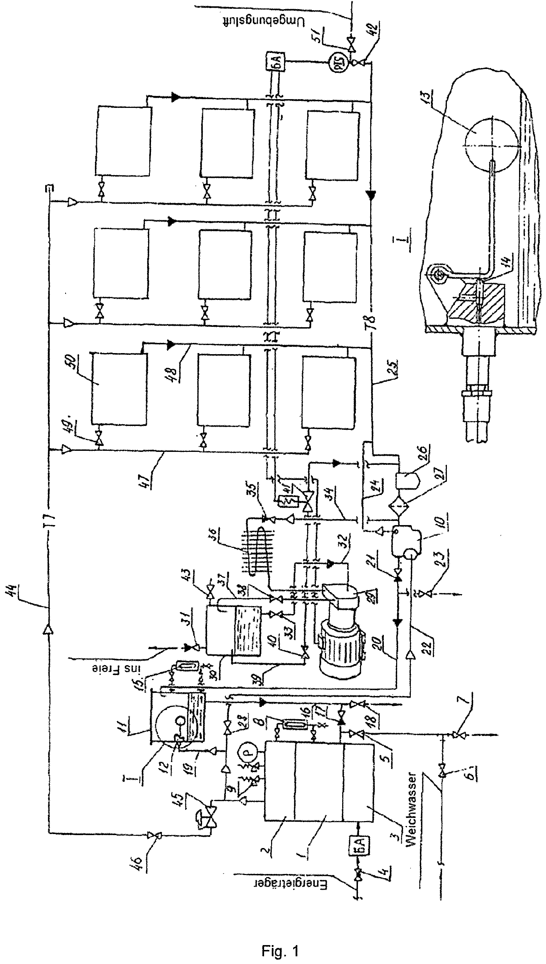

Fig. 1 zeigt das Schema des Vakuumdampfheizungssystems mit parallelen Untersystemen zur Kondenswasserrückführung in den Kessel und die Vakuumbildung des Systems.

Das Vakuumdampfheizungssystem besteht aus folgenden Untersystemen (s. Fig. 1): Dampfuntersystem, Untersystem zur Kondenswasserrückführung in den Kessel, Untersystem zur Vakuumbildung und qualitativen Regelung der Dampftemperatur und Untersystem für Raumbeheizung.

Das Untersystem Dampf enthält: einen Dampfkessel 1, einen Dampfsammler 2, einen Brennraum 3, einen Kükenhahn 4, ein Kesselnachspeisungsventil 5 für Wasser, ein Weichwasserleitungsventil 6, ein Auslassventil 7 für das Untersystem Dampf, Wasserstandsanzeiger 8 im Kessel, Sicherungsventile 9, eine Einheit zur automatischen Regelung der Brennstoffzufuhr und zur Sperrung im Falle der Unterbrechung der Energieträgerzufuhr und ein Mano-Vakuummeter zur visuellen Überwachung des Unterdrucks (Saugdrucks) im Untersystem.

Das Untersystem zur Kondenswasserrückführung in den Kessel enthält: einen mechanischen Umwälz-Kondenswasserableiter (Kondenswasserpumpe) 10, einen Kondenswassersammelbehälter 11, der mit einem Schwimmerventil für Dampfzufuhr aus dem Kessel 12, mit einer Schwimmervorrichtung 13, einem Nadelventil 14 und einem Kondenswasserstandsanzeiger 15 im Behälter versehen ist, eine Rohrleitung für die Kondenswasserzufuhr in den Kessel 16, ein Rückschlagventil 17, ein Entleerungsventil 18, eine Rohrleitung zur Dampfzufuhr 19 aus dem Kessel (um den Gegendruck in der Kondenswasserzufuhrleitung in Richtung Kessel zu balancieren), eine Rohrleitung 20 zur Kondenswasserzufuhr, ein Rückschlagventil 21, eine Rohrleitung 22 für die Betriebsdampfzufuhr in den Kondenswasserableiter, ein Entleerungsventil 23, eine Rohrleitung 24 für den Ausstoß des Abdampfes, eine zentrale Kondenswasserleitung 25, einen Schlammfänger 26, einen Siebfilter 27 und ein Ventil 28 zur Betriebsdampfzufuhr.

Das Untersystem zur Vakuumbildung und qualitativen Regelung enthält: eine Vakuum-Wasserringpumpe 29, einen Luftabscheider 30, der mit einem Rückschlagventil 31 versehen ist, eine Wasserleitung 32 zur Bildung eines Wasserrings in der Pumpe, ein Ventil 33, eine Luftsaugrohrleitung 34, um die Luft aus dem System zu saugen, ein Rückschlagventil 35, einen Kühler 36 für das Dampf-Kondenswasser-Gemisch, das nebenbei mit der Luft aus der Kondenswasserleitung 25 gesaugt wird, eine Zufuhrrohrleitung 37 für die abgepumpte Luft und das gekühlte Kondenswasser, ein Ventil 38, eine Rohrleitung 39, um das Überlaufwasser in die Kondenswasserleitung zurückzuführen, ein Rückschlagventil 40, ein Magnetventil (normal offen) 41, eine Einheit zur automatischen Betriebssteuerung der Vakuum-Wasserringpumpe und des Magnetventils, ein Kontaktmanometer, ein Ventil 42, ein Ventil 43 für die Vorfüllung mit Wasser, um die Pumpe zu starten, und ein Ventil 51, um den Unterdruck im System zu vermindern.

Das Untersystem zur Raumbeheizung enthält: eine Dampfverteilungsleitung 44, einen Hinterdruckregler 45, ein Dampfventil 46, senkrechte Dampf-Trennleitungen 47, senkrechte Kondenswasserleitungen 48, ein Dampfdurchflussventil 49 und Heizgeräte 50.

Es sei besonders bemerkt, dass jedes der Untersysteme nach der Montage einer Dichtigkeitsprüfung unterzogen werden muss, um einen befriedigenden Abdichtungsgrad des gesamten Systems zu erreichen. Als Prüfmedium kann das Medium mit einem Luftanteil von 99 % und einem Heliumanteil von 1 % bei einem Einpumpdruck von 6 kg/cm² angewendet werden. Die Leckkontrolle wird mit einem Helium-Lecksucher durchgeführt.

Funktionsweise des Vakuumdampfheizungssystems:
Der Kükenhahn 4 und die Ventile 6, 7, 18, 23, 33, 51 werden in die Schließstellung gebracht. Die Ventile 5, 28, 38, 46, 49 werden in die Offenstellung gebracht. Das Flexrohr des geeichten Weichwasserbehälters wird an das Ventil 43 angeschlossen, das in die Offenstellung gebracht wird. Der Behälter wird mit Wasser bis zum Stutzen der Überlaufleitung im Luftabscheider befüllt. Danach wird das Ventil in die Offenstellung umgestellt, und der Schlauch wird abgetrennt. Der Dampfkessel wird mit Wasser bis zur oberen Höhenmarke des Kesselwasserraums gemäß dem Wasserstandsanzeiger 8 gefüllt, indem die Ventile 6, 5 geöffnet werden. Nach dem Füllen werden die Ventile wieder geschlossen.

Der flexible Schlauch des geeichten Behälters wird an das Ventil 18 angeschlossen. Das Ventil 18 wird in die Offenstellung gebracht. Der Behälter wird mit Wasser bis zur unteren Oberfläche des Schwimmers gemäß dem Wasserstandsanzeiger 15 gefüllt. Das Flexrohr wird nach dem Füllen abgetrennt. Das Ventil wird in die Schließstellung gebracht. Der Kondenswasser-Sammelbehälter ist relativ zum Dampfkessel in der Höhe so angeordnet, dass der Wasserfüllstand im Behälter dem Wasserstand im Dampfkessel entspricht.

Die Einheit zur automatischen Betriebssteuerung der Vakuum-Wasserringpumpe 29 und des Magnetventils 41 wird danach eingeschaltet, und der Unterdruckanzeiger am Kontaktmanometer wird auf P_{abs} = -0,7 kg/cm² umgestellt. Das entspricht einem Absolutdruck von P_{abs} = 0,3 kg/cm².

Die Vakuum-Wasserringpumpe wird wie folgt aktiviert: Das Ventil 33 wird in die Offenstellung gebracht. Der Arbeitsraum der Pumpe wird mit Wasser aufgefüllt. Die Pumpe wird eingeschaltet. Beim Einschalten der Pumpe wird das Magnetventil 41 automatisch in die Schließstellung gehen. Dann wird die abgepumpte Luft aus dem System über das Rückschlagventil 31 ins Freie abgeleitet. Wird der Soll-Unterdruck im System erreicht, schaltet die Pumpe automatisch aus. Dabei geht das Ventil 41 in die Offenstellung, wodurch das in den Luftabscheider übergeflossene Kondenswasser zurück in die Kondenswasserleitung fließt.

Der Dampfkessel wird wie folgt gestartet: Der Kükenhahn 4 wird in die Offenstellung gebracht. Die Automatikeinheit aktiviert den Brenner im Kesselbrennraum 3. Der beim Kochen gebildete Dampf wird im Dampfsammler bis zum Trockengrad x = 0,85 abgeschieden. Danach kommt der Dampf über den Druckregler, der auf dem Stand mit einer Hinterdruckanlage P_{abs} = 0,9 kg/cm² eingestellt ist, in die Dampfverteilungsleitung 44 und dann in das Untersystem zur Raumbeheizung, und zwar in die Heizgeräte 50. Hier kondensiert er und gibt den größten Anteil der latenten Verdampfungswärme an das Gerät und dann - mit einer hohen Wärmeübertragungszahl - an den Raum ab. Das Kondenswasser fließt über senkrechte Kondenswasserleitungen in die zentrale Kondenswasserleitung und danach durch Gefälle in den mechanischen Umwälz-Kondenswasserableiter. Der Kondenswasserableiter transportiert das Kondenswasser mit Hilfe des über die Rohrleitung 22 zugeführten Betriebsdampfs in den Kondenswasser-Sammelbehälter über die Rohrleitung 20. Je nach Auffüllung des Behälters mit Kondenswasser steigt der Schwimmer der Dampfzufuhrvorrichtung etwas höher. Dadurch wird es möglich, dass das Nadelventil den Dampf in den Behälter leitet. Dabei wird der Druck im Behälter dem Druck in der Rohrleitung 16 gleich. Das Rückschlagventil 17 wird in der Offenstellung sein. Das Kondenswasser fließt in den Kessel durch sein Eigengewicht. Dabei betätigt die Schwimmervorrichtung das Nadelventil, das die Dampfzufuhr absperrt. Somit kann die nächste Kondenswassermenge in den Behälter umgepumpt werden.

Es sei besonders bemerkt, dass bei nicht laufender Vakuum-Wasserringpumpe das gekühlte im Luftabscheider 30 während des Pumpenbetriebs aufgenommene Kondenswasser über das Rückschlagventil 40 und das normal geöffnete Magnetventil und weiter über die Rohrleitung 39 in die zentrale Kondenswasserleitung 25 zurückfließt. Somit wird eine stabile Wasserbilanz im System sichergestellt. Das heißt, es wird ein ständiger Nenn-Wasserstand im Dampfkessel gesichert, ohne dass das Wasser beim Systembetrieb nachgespeist werden muss (es ist keine Wasserentgasungsanlage erforderlich). Beim Absolutdruck P_{abs} = 0,9 kg/cm² im System wird die Dampftemperatur 96° C sein. Das macht es möglich, korrosionssichere Kunststoffverbund- und Polyäthylenrohre im System einzusetzen.

Der mechanische Umwälz-Kondenswasserableiter (Kondenswasserpumpe) verbraucht keinen elektrischen Strom; die im aussetzenden Betrieb laufende Vakuum-Wasserringpumpe ist am Umpumpen des Kondenswassers nicht beteiligt, weil die Untersysteme für die Kondenswasserrückführung und Vakuumbildung getrennt sind. Somit steigt die Energieeffizienz des Systems.

Die Fähigkeit der Kondenswasserpumpe, das Kondenswasser in große Höhe je nach Betriebsgasdruck (Dampf oder Druckluft) zu fördern, ermöglicht es, den Dampfkessel sowohl im Kellerbereich als auch auf dem Dach und auf dem Fußboden unterzubringen, wobei der Umwälz-Kondenswasserableiter selbst mindestens um 200 mm tiefer als die zentrale Kondenswasserleitung liegen muss.

Das kennzeichnende Merkmal dieses Heizungssystems ist es, dass das System in unabhängig voneinander laufende Untersysteme für die Kondenswasserrückführung unter Anwendung des mechanischen Umwälz-Kondenswasserableiters und des Kondenswassersammelbehälters mit dem Schwimmerventil für die Zufuhr des Ausgleichsdampfs in den Behälter aufgeteilt ist, wobei das heiße Kondenswasser dem Kessel in kleinen Mengen zugeführt wird. Eine derartige Zufuhr stört das stabile Wasserkochen nicht. Die Fähigkeit des Umwälz-Kondenswasserableiters, das Kondenswasser in eine große Höhe zwanghaft zu fördern, ermöglicht es, dass die Wärmeanlage in verschiedenen Ausführungen eingesetzt werden kann. Das Vakuumbildungs-Untersystem mit automatischer Steuerung zur Einstellung verschiedener Unterdrücke ermöglicht es, die Temperatur in einem ziemlich breiten Bereich mit einem Grad des Vakuums zwischen Pv = 0,1 kg/cm² und Pv = 0,7 kg/cm² zu regeln. Das Temperaturgefälle des Wärmeträgers in diesem Unterdruckbereich beträgt 96°- 68° C. Das entspricht den hygienischen Normanforderungen.

Die Anwendung eines Schemas mit obiger Dampfverteilung und mit Nebenströmungen von Dampf und Kondenswasser im Raumheizungsuntersystem gemäß der Erfindung beseitigt den Lärm während der Dampfströmung mit einer hohen Geschwindigkeit. Dabei steigt die Wärmeübertragungszahl des Systems wesentlich im Vergleich zu konventionellen Wasser- und Dampf-Heizungssystemen. Die technische Analyse des Betriebs der Erfindung hat ergeben, dass der Wirkungsgrad des Vakuumdampfheizungssystems 89 % beträgt und die Energieträgereinsparung bei 38 % liegt.

Das Heizungssystem gemäß der Erfindung ist bedienungsfreundlich, betriebssicher und stellt einen zuverlässigen störungsfreien Betrieb des Wärmeversorgungssystems sicher.

## Patentansprüche

1. Vakuumdampfheizungssystem mit Wärmeströmungsübertragung nach dem Vakuumdampfverfahren mit einem Dampfkessel (1), einer oberen Dampfverteilungsleitung (44), senkrechten Dampf-Trennleitungen (47), senkrechten Kondenswasserleitungen (48), einer zentralen Kondenswasserleitung (25), einem Dampfuntersystem, einem Kondenswasserrückführungsuntersystem, einem Vakuumbildungsuntersystem und einem Raumbeheizungsuntersystem, wobei:
- der gesamte Innenraum des Systems luftleer gemacht werden kann und
- der Unterdruck regelbar ist und wobei der Dampfkessel mit einem Manu-Vakuummeter zur visuellen Überwachung des Unterdrucks (Saugdrucks) im Untersystem und einem Hinterdruckregler versehen ist,
**dadurch gekennzeichnet:**
- **dass** der Dampfkessel (1) mit einer Einheit zur automatischen Regelung und Sperrung der Energieträgerzufuhr, von Sicherheitsventilen, einem Zwischen-Energieträgerstandanzeiger im Kessel (1), einem System zur automatischen Steuerung mit einem Kontaktmanometer und einem Systemunterdruckreduzierungsventil versehen ist, und
- **dass** das Untersystem zur Kondenswasserrückführung in den Kessel (1):
- einen mechanischen Umwälz-Kondenswasserableiter (10),
- einen Kondenswassersammelbehälter (11), der mit einem Schwimmerventil für Dampfzufuhr aus dem Kessel (12), mit einer Schwimmervorrichtung (13), einem Nadelventil (14) und einem Kondenswasserstandsanzeiger (15) im Behälter versehen ist,
- eine Rohrleitung für die Kondenswasserzufuhr in den Kessel (16),
- ein Rückschlagventil (17),
- ein Entleerungsventil (18),
- eine Rohrleitung zur Dampfzufuhr (19) aus dem Kessel (1),
- eine Rohrleitung (20) zur Kondenswasserzufuhr,
- ein zweites Rückschlagventil (21),
- eine Rohrleitung (22) für die Betriebsdampfzufuhr in den Kondenswasserableiter,
- ein zweite Entleerungsventil (23)
- eine Rohrleitung (24) für den Ausstoß des Abdampfes,
- eine zentrale Kondenswasserleitung (25),
- einen Schlammfänger (26),
- einen Siebfilter (27) und
- ein Ventil (28) zur Betriebsdampfzufuhr
enthält, wobei:
- die zentrale Kondenswasserleitung (25) via dem Schlammfänger (26) und dem Siebfilter (27) in den Kondenswasserableiter (10) mündet,
- die Rohrleitung (22) für die Betriebsdampfzufuhr in den Kondenswasserableiter (10) vom Kessel (1) über das Ventil (28) in den Kondenswasserableiter (10) mündet,
- die Rohrleitung (20) zur Kondenswasserzufuhr vom Kondenswasserableiter (10) ausgehend über das zweite Rückschlagventil (21) in den Kondenswassersammelbehälter (11) mündet und das zweite Entleerungsventil (23) nach dem Kondenswasserableiter angeordnet ist,
- die Rohrleitung (16) für die Kondenswasserzufuhr in den Kessel (1) vom Kondenswassersammelbehälter (11) ausgehend über das Rückschlagventil (17) in den Kessel (1) mündet und das Entleerungsventil (18) vor dem Rückschlagventil (17) angeordnet ist,
- die Rohrleitung zur Dampfzufuhr (19) aus dem Kessel (1) über das Schwimmerventil (12) für Dampfzufuhr aus dem Kessel (1) in den Kondenswassersammelbehälter (11) mündet,
- die Rohrleitung (24) für den Ausstoß des Abdampfes vom Kondenswasserableiter (10) vor dem Schlammfänger in die zentrale Kondenswasserleitung (25) mündet,
und das Untersystem so ausgeführt ist dass:
- das Kondenswasser über die zentrale Kondenswasserleitung (25) in den mechanischen Umwälz-Kondenswasserableiter (10) fließt,
- der Kondenswasserableiter (10) das Kondenswasser mit Hilfe des über die Rohrleitung (22) zugeführten Betriebsdampfs über die Rohrleitung (20) in den Kondenswasser-Sammelbehälter (11) transportiert,
- mit der Auffüllung des Kondenswasser-Sammelbehälters (11) mit Kondenswasser der Schwimmer der Dampfzufuhrvorrichtung höher steigt, wodurch das Nadelventil (14) den Dampf in den Kondenswasser-Sammelbehälter (11) leitet und der Druck im Kondenswasser-Sammelbehälter (11) dem Druck in der Rohrleitung (16) gleich und das Rückschlagventil (17) in der Offenstellung sein wird, und das Kondenswasser durch sein Eigengewicht in den Kessel (1) fließt, wodurch die Schwimmervorrichtung (13) das Nadelventil (14) betätigt, das die Dampfzufuhr absperrt, so dass die nächste Kondenswassermenge in den Kondenswasser-Sammelbehälter (11) umgepumpt werden kann.

2. Vakuumdampfheizungssystem nach Anspruch 1,
wobei der Umwälz-Kondenswasserableiter (10) selbst mindestens um 200 mm tiefer als die zentrale Kondenswasserleitung (25) liegt.

## Claims

1. A vacuum steam heating system with heat flow transfer by the vacuum steam method comprising a steam boiler (1), an upper steam distribution line (44), vertical steam separation lines (47), vertical condensed water lines (48), a central condensed water line (25), a steam subsystem, a condensed water return subsystem, a vacuum formation subsystem and a space heating subsystem, wherein:
- the entire interior of the system can be made airless, and
- the vacuum is adjustable and wherein the steam boiler is equipped with a manu-vacuum gauge for visual monitoring of the vacuum (suction pressure) in the subsystem and a backpressure regulator,
**characterised in that**
- **in that** the steam boiler (1) is provided with a unit for automatic control and shut-off of the energy carrier supply, safety valves, an intermediate energy carrier level indicator in the boiler (1), a system for automatic control with a contact pressure gauge and a system vacuum reduction valve, and
- that the sub-system for condensation water return to the boiler (1):
- a mechanical circulation condensate drain (10),
- a condensed water collecting vessel (11) provided with a float valve for steam supply from the boiler (12), with a float device (13), a needle valve (14) and a condensed water level indicator (15) in the vessel,
- a pipe for the condensation water supply to the boiler (16),
- a non-return valve (17),
- a drain valve (18),
- a pipe for steam supply (19) from the boiler (1),
- a pipe (20) for the condensation water supply,
- a second non-return valve (21),
- a pipe (22) for the operating steam supply into the condensate drain,
- a second drain valve (23),
- a pipe (24) for the discharge of the exhaust steam,
- a central condensation water line (25),
- a mud trap (26),
- a sieve filter (27) and
- a valve (28) for the supply of operating steam
contains whereby:
- the central condensation water pipe (25) opens into the condensation water drain (10) via the sludge trap (26) and the sieve filter (27),
- the pipe (22) for the operating steam supply into the condensate drain (10) opens from the boiler (1) via the valve (28) into the condensate drain (10),
- the pipe (20) for the condensation water supply from the condensation water drain (10)
via the second non-return valve (21) into the
condensation water collection tank (11) and the second drain valve (23) is arranged downstream of the condensation water drain,
- the pipe (16) for the condensation water supply into the boiler (1) from the Condensation water collecting tank (11) via the non-return valve (17) in the boiler (1) and the drain valve (18) before the non-return valve (17) is arranged,
- the pipe for the steam supply (19) from the boiler (1) via the float valve (12) for steam supply from boiler (1) into the condensation water collector (11),
- the pipe (24) for discharging the exhaust steam from the condensate drain (10) opens into the central condensate pipe (25) upstream of the sludge trap, and the subsystem is designed so that:
- the condensation water via the central condensation water line (25) into the mechanical circulation condensate drain (10),
- the condensation drain (10) removes the condensation water with the aid of the (22) via the pipeline (20) into the service steam.
The condensation water is transported to the condensation water collection container (11),
- with the filling of the condensation water collection container (11) with condensation water
the float of the steam supply device rises higher, causing the needle valve to (14) directs the steam into the condensation water collection tank (11) and the pressure in the condensate collector (11) is equal to the pressure in the pipe (16), and the non-return valve (17) will be in the open position, and the condensation water flows by its own weight into the boiler (1), whereby the float device (13) actuates the needle valve (14), which shuts off the steam supply, so that the next amount of condensation water can be pumped into the condensation water collection container (11).

2. Vacuum steam heating system according to claim 1,
wherein the circulation condensate drain (10) itself is at least 200 mm lower than the central condensate line (25).

## Revendications

1. Système de chauffage à la vapeur et à vide avec transmission du flux thermique selon le procédé en phase à vapeur et à vide avec une chaudière (1), une conduite de transmission à vapeur supérieure (44), des séparations à vapeur perpendiculaires (47), des conduites d'eau condensée perpendiculaires (48), une conduite centrale d'eau condensée (25), un sous-système à vapeur, un sous-système de recyclage d'eau condensée, un sous-système de formation à vide et un sous-système de chauffage de local où :
- L'habitacle entier du système peut être évacué et
- Le vide est réglable et où la chaudière est munie d'un mètre à vide pour la surveillance visuelle de la dépression (pression d'aspiration) dans le sous-système et un régulateur de contre-pression est caractérisé de sorte que:
- La chaudière (1) est munie d'une unité pour le réglage automatique et le blocage de l'alimentation du porteur d'énergie, de ventilateurs de sécurité, d'un indicateur de niveau intermédiaire du porteur d'énergie au niveau de la chaudière (1), d'un système pour la commande automatique avec un contacteur manométrique et d'un ventilateur de réduction de la dépression du système et que
- Le sous-système de recyclage de l'eau condensée au niveau de la chaudière (1) contient :
- Un dissipateur de circulation d'eau condensée mécanique (10),
- Un récipient de collecte d'eau condensée (11) est muni d'une soupape à flotteur pour l'alimentation en vapeur de la chaudière (12), d'un moyen formeur flottant (13), d'une vanne à pointeau (14) et d'un indicateur de niveau d'eau condensée (16) dans le conteneur,
- Une conduite pour l'alimentation en eau condensée dans la chaudière (16),
- Un clapet anti-retour (17),
- Une purge (18),
- Une conduite (20) pour l'alimentation en vapeur de la chaudière (1),
- Une conduite (20) pour l'alimentation en eau condensée,
- Un deuxième clapet anti-retour (21),
- Une conduite (22) pour l'alimentation en vapeur industrielle dans le dissipateur d'eau condensée,
- Une deuxième purge (23),
- Une conduite (24) pour l'éjection de la vapeur d'échappement,
- Une conduite centrale d'eau condensée (25),
- Un attrape-boue (26),
- Un filtre à tamis (27) et
- Un ventilateur (28) pour l'alimentation en vapeur industrielle où :
- La conduite centrale en eau condensée (25) via l'attrape-boue (26) et le filtre à tamis (27) débouchent dans le dissipateur de l'eau condensée (10),
- La conduite (22) pour l'alimentation en vapeur industrielle débouche dans le dissipateur en eau condensée (10) de la chaudière (1) via le ventilateur (28) dans le dissipateur en eau condensée (10),
- La conduite (20) en vue de l'alimentation en eau condensée débouche du dissipateur en eau condensée (10) partant du deuxième clapet anti-retour (21) dans le récipient de collecte de l'eau condensée (11) et la deuxième purge (23) est placée après le dissipateur en eau condensée,
- La conduite (16) pour l'alimentation en eau condensée dans la chaudière (1) du récipient de collecte de l'eau condensée (11) partant via le clapet anti-retour (17) dans la chaudière (1) et la purge (18) est placée devant le clapet anti-retour,
- La conduite pour l'alimentation en vapeur (19) débouche de la chaudière (1) via la soupape à flotteur (12) pour l'alimentation en vapeur de la chaudière (1) dans le récipient de collecte d'eau condensée (11),
- La conduite (24) pour l'éjection de la vapeur d'échappement débouche du dissipateur de l'eau condensée (10) devant l'attrape-boue dans la conduite centrale de l'eau condensée (25) et le sous-système est activé de sorte que :
- L'eau condensée coule via la conduite d'eau condensée centrale (25) dans le dissipateur mécanique de la circulation d'eau condensée (10),
- Le dissipateur d'eau condensée (10) transporte l'eau condensée à l'aide de la vapeur industrielle introduite via la conduite (22) via la conduite (20) dans le récipient de collecte de l'eau condensée (11),
- Avec le remplissage du récipient de collecte (11) avec de l'eau condensée, le flotteur du dispositif en alimentation en la vapeur augmente par quoi la vanne à pointeau (14) dirige la vapeur dans le récipient de collecte de l'eau condensée (11) et la pression dans le récipient de collecte de l'eau condensée (11) équivaut à la pression au niveau de la conduite (16) et le clapet anti-retour (17) se situe dans la position ouverte et l'eau condensée coule dans le poids net dans la chaudière (1) moyennant quoi le moyen formation flotteur (13) active la vanne à pointeau (14) bloquant l'alimentation en vapeur de sorte que la quantité suivante en eau condensée peut être pompée dans le récipient de collecte de l'eau condensée.

2. Système à vapeur à vide selon la revendication 1 où le dissipateur de circulation de l'eau condensée (10) se situe même au minimum de 200 mm plus profond que le dissipateur central en eau condensée (25).
